# EUROPEAN PATENT SPECIFICATION

(11) **EP 0 531 287 B1**
(45) Date of publication and mention of the grant of the patent: **22.03.1995**
(21) Application number: 90910170.1
(22) Date of filing: 17.05.1990
(51) Int. Cl.: A01B 1/00, A01D 9/00, B65G 1/00, E01H 5/02

(54) **A HAND IMPLEMENT, PROVIDED WITH AN AUXILIARY HANDLE**
HANDWERKZEUG MIT ZUSATZHANDGRIFF
OUTIL MANUEL COMPRENANT UNE POIGNEE SUPPLEMENTAIRE

(43) Date of publication of application: 17.03.1993
(73) Proprietor: STEN S. MODEEN & CO. AB, S-194 52 Upplands Väsby (SE)
(72) Inventor: BUGGE, Sten, S-184 00 Akersberga (SE)
(74) Representative: Andersson, Andy Rudy
(86) International application number: SE9000332
(87) International publication number: WO9117647

(56) References cited:
- DK-C- 52 045
- GB-A- 322 531
- GB-A- 584 189
- SE-B- 463 293
- US-A- 3 751 094
- US-A- 4 787 661

## Description

The present invention relates to an implement comprising a shaft, an upper handgrip mounted thereon, a load-supporting lower part or tool, and an auxiliary handgrip part which is mounted on the shaft for movement in the longitudinal direction thereof, said auxiliary handgrip part including a pair of arms which diverge in a direction from first ends which lie close together or in contact with one another, to second ends which are spaced relatively widely apart and which are provided with collars directed in mutually the same plane and intended to embrace the shaft, and which implement further comprises means for locking the auxiliary handgrip part in a desired position along the shaft.

Implements provided with auxiliary, work-facilitating handgrips are known for example from DK-C-52045 which corresponds to the preamble of claim 1.

The prime purpose of the present invention is to provide a friction lock arrangement by means of which the auxiliary handgrip can be moved continuously, i.e. smoothly, to desired positions in relation to the shaft and locked in said positions.

This object is achieved with an implement of the kind having the characterizing features set forth in the characterizing clause of claim 1.

An implement which includes these features will function in the mannner intended, namely in a manner which will enable the auxiliary handgrip to be swung around the shaft at the same time as the shaft, and therewith the aforesaid tool in the form of a spade-blade, fork-head or some like tool, can be rotated axially relative to the auxiliary handgrip.

The depending claims define advantgeous developments of the inventive concept defined in claim 1.

An exemplifying embodiment of the invention will now be described in more detail with reference to the accompanying drawing, in which

Figure 1 is a perspective view of the improved working implement or tool according to the invention; and

Figure 2 is a sectional view taken on the line II-II in Figure 1.

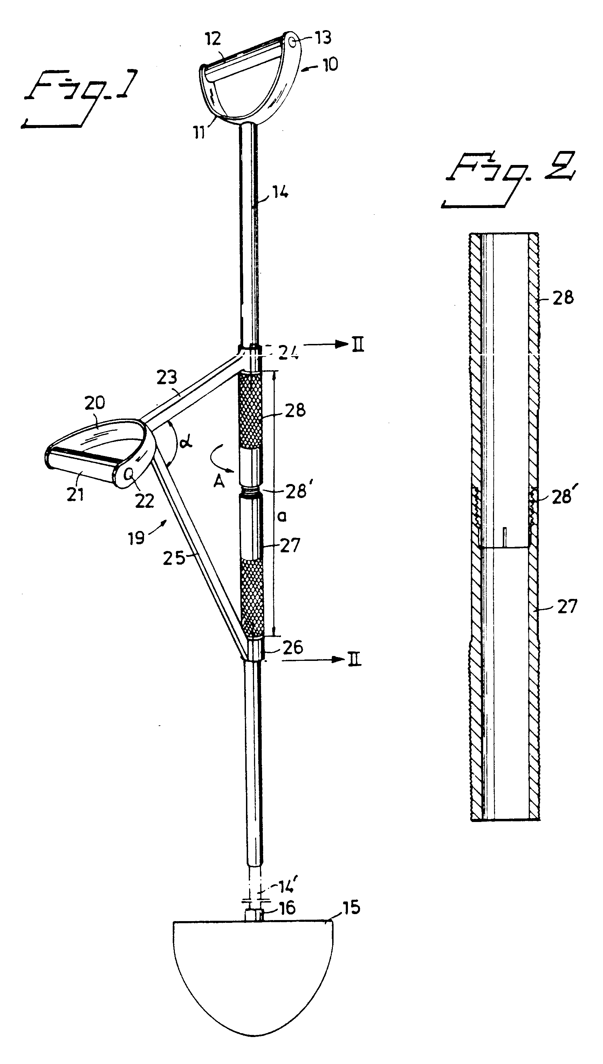

The drawing illustrates an implement which includes, in a known manner, an upper first stirrup-shaped handgrip 10 which comprises an essentially U-shaped part 11 and a tubular horizontal part 12 the ends of which are joined to a respective end of the horizontal part 12 and which is preferably mounted for rotation on one or two pins 13. The handgrip 10 is fixed, either detachably or permanently to an elongated shaft 14, which may have the form of a hollow tube along the whole or a part of its length. Mounted telescopically on the end of the shaft remote from the handgrip 10 is a part 14 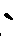 which forms an extension of the shaft. In the case of the illustrated embodiment, the shaft-extension 14' is telescopically moveable within the shaft 14 and can be locked in any desired position within said shaft with the aid of known means, in other words there are no clearly defined positions in which the shaft extension must be brought for locking purposes. The locking means, not shown in detail, may comprise a known friction locking sleeve, a pin which passes through the shaft 14 and the shaft-extension 14', or some corresponding device. Attached to the free end of the shaft-extension 14' is a load-support device or tool 15, such as a spade-blade, a pitch-fork, a snow-shovel, or a fork-head for example.

The upper horizontal part of the blade, etc, 15 is conveniently provided with or formed integrally with a hollow sleeve 16 having conically configured walls. The diameter of the sleeve 16 is larger than the diameter of the shaft-extension 14', so as to enable the spade-blade, or like tool 15 to be attached to the shaft-extension 14' and there friction-locked.

The improved inventive implement is also provided with an auxiliary handgrip generally shown at 19.

The auxiliary handgrip 19 has a stirrup-lik part which comprises a U-shaped part 20, the free ends of which are joined to a tubular part 21 mounted for rotation on one or two horizontal pins 22, similar to the first mentioned handgrip 10.

The auxiliary handgrip 19 is rigidly configured and in addition to the stirrup-like part 20, 21 further includes a first angled arm 23, one end of which is attached to the underside of the U-shaped part 20 and the other end of which carries a collar 24, and a second angled arm 25, which is preferably welded firmly to one end of the first arm 23. The arms are preferably attached in the vicinity of the undersurface of the U-shaped part 20 so as to define therebetween an angle α, which may be between 60-100°, prefarably between 83-88°.The other end of the second angled arm 25 is also fitted with a collar 26, similar to the first arm 23.The collars 24 and 26 of respective first and second arms 23,25 extend in mutually the same vertical plane and the inner diameters of said collars are slightly larger than the outer diameter of the shaft 14.

The auxiliary handgrip 19 is fitted to the shaft 14 with the aid of the collars 24,26 and can be displaced along the length of said shaft.

The collar-carrying ends of the angled arms are spaced apart at a given distance a and mounted between the mutually ends of the two collars is a sleeve arrangement comprising a first sleeve 27 provided with an internal screw thread, and a second sleeve, the end of which facing the first sleeve 27 has a screw-threaded part which is intended to coact with the internal screw thread of the first sleeve 27, and therewith enable the the sleeves 27,28 to be twisted by rotation about their longitudinal axes.

When the screw joint thus formed is used to bring the mutually facing ends of the two sleeves 27,28 into abutment with one another, the total length or axial extension of the two sleeves will be smaller than the fixed distance a between the collars 24,26 of the auxiliary handgrip 19, wheras when the screw joint is used to move the two sleeves 27,28 apart to the maximum extent possible without actually divorcing the sleeves, the axial extension of the two sleeves will be far greater than said fixed distance a.

As shown in the drawing, the sleeves 27, 28 are fitted onto the main shaft 14, optionally with a relatively close fit, and can be displaced along the shaft.

In one position of the sleeves 27,28, for instance when the sleeves are in tight abutment with one another, the auxiliary handgrip 19 can be moved selectively up and down the shaft 14 while entraining the sleeves 27,28 at the same time. The auxiliary handgrip 19 can therefore be moved smoothly and continuously to any any position along the shaft, commensurate with the height of the person using the implement.

The aforedescribed arrangement also enables the auxiliary handgrip 19 to be moved smoothly and continuously to any desired position along and on the shaft 14 and to be locked in this position and against rotation of the handgrip relative to said shaft, by moving the sleeves 24,27 apart, e.g. by twisting the sleeve 28 in the direction of the arrow A and bringing the ends of the sleeves into contact with the inwardly facing ends of the collars 24,26. The force of this abutment urges the internal surfaces of the collars 24,26 into frictional locking engagement with the shaft 14. By selection of the backed-off (unscrewed) position of the sleeves 27,28, it is possible to obtain the desirable function whereby while work is being carried out, the auxiliary handgrip 19 will be held locked against axial movement along the shaft 14 but be free to rotate relative to the shaft.

Work involving, for instance, moving hay or straw from one place to another, is effected by picking-up a load of hay on the tool 15 of the implement, in this case a hay-fork, lifting the load, and depositing the load, by simply twisting the shaft 14 and therewith also the tool and the load supported thereby. By appropriately setting the auxiliary handgrip 19 positionally in relation to the handgrip 10, the load can be gathered, lifted and deposited in the aforesaid manner, without the workman needing to bend his or her back to any appreciable extent.

The inventive implement is particularly intended for use when moving hay, straw, mucking-out stables, cow-sheds and like work. The implement can be used with equal advantage, however, to shovel snow, i.e. when the tool 15 fitted to the shaft 14, 14' has the form of a shovel. The implement can thus be fitted with any known kind of tool 15 and the tool can be changed to suit the nature of the work involved.

Because the shaft 14 is telescopic, the main part of the shaft can be made shorter than what is normal, thereby enabling the implement to be used by very short people and by very tall people, while ensuring that the person using the implement has the correct body-attitude from an ergonometric aspect, irrespective of his or her height, the moveability of the auxiliary handgrip 19 being a prerequisite in this regard, of course.

## Claims

1. An implement comprising a shaft (14), an upper handgrip (10) mounted on said shaft, a load-supporting lower part or tool (15), and an auxiliary handgrip part (19) which is mounted on the shaft (14) for movement in the longitudinal direction thereof, said auxiliary handgrip part (19) including a pair of arms (23) which diverge in a direction from first ends which lie close together or in contact with one another, to second ends which are spaced relatively widely apart and which are provided with collars (24,26) which are directed in mutually the same plane and which are intended to embrace the shaft (14), and which implement further comprises means for locking the auxiliary handgrip part (19) in a desired position along the shaft, **characterized** in that the arms (23,25) are connected rigidly to one another such as to define a constant space (a) between the collar-carrying ends of said arms (23,25); and in that said space (a) is a friction-lock device (27,28) which is so constructed that in one functional position thereof it will prevent displacement of the auxiliary handgrip (19) along the shaft (14) while at the same time preventing rotational movement of the shaft (14) relative to the auxiliary handgrip (19), and in another functional position will prevent displacement of the handgrip along the shaft (14) while permitting rotational movement between the shaft (14) and the auxiliary handgrip (19).

2. An implement according to Claim 1, **characterized** in that the lower part of the shaft (14) is telescopically extensible such as to enable the length of the shaft (14, 14') to be adjusted in relation to the auxiliary handgrip part (19) and therewith achieve an ergonometrically correct working position to be obtained for both short and tall people.

3. An implement according to Claim 1, **characterized** in that the friction lock device comprises sleeves (27, 28) arranged between the collars (24, 26) on the arms (23, 25) and displaceable along and rotatable on said shaft (14); in that the sleeves (27, 28) are screwthreaded in a manner such that rotation between the sleeves (27, 28) in one direction results in friction locking of the auxiliary handgrip part (19) against rotation relative to the shaft (14) and against movement along said shaft, and in an opposite direction enables the shaft (14) to be rotated relative to the auxiliary handgrip part (19) with the said handgrip part locked against movement along said shaft.

4. An implement according to Claim 1 or 3, **characterized** in that the sleeves (27, 28) are rotatable in relation to one another so that the auxiliary handgrip part and the sleeves (27, 28) can be moved along the shaft.

5. An implement according to Claim 2, **characterized** in that the load supporting part (15) of the implement is detachably attached to the shaft (14) or to the telescopic section thereof.

## Patentansprüche

1. Arbeitsgerätschaft, umfassend einen Stiel (14), einen an dem Stiel angebrachten oberen Handgriff (10), ein lasttragendes unteres Teil oder Werkzeug (15), und einen Hilfshandgriff (19), der an dem Stiel (14) in Längsrichtung desselben bewegbar gelagert ist, wobei der Hilfshandgriff (19) zwei Arme (23, 25) aufweist, die in einer Richtung von ersten Enden, die eng benachbart oder in gegenseitiger Berührung angeordnet sind, zu zweiten Enden divergieren, die unter einem verhältnismäßig großen Abstand angeordnet und mit Krägen (24, 26) versehen sind, die in die gleiche Ebene gerichtet und dazu bestimmt sind, den Stiel (14) zu umgreifen, wobei die Arbeitsgerätschaft ferner Mittel umfaßt, um den Hilfshandgriff (19) in einer gewünschten Lage längs des Stiels festzulegen, dadurch **gekennzeichnet**, daß die Arme (23, 25) starr miteinander verbunden sind, um einen unveränderlichen Abstand (a) zwischen den Kragen tragenden Enden der Arme (23, 25) festzulegen; und daß der Abstand (a) eine reibschlüssige Arretiereinrichtung (27, 28) ist, die so ausgebildet ist, daß sie in einer Betriebsstellung eine Verlagerung des Hilfshandgriffs (19) längs des Stiels (14) verhindert und gleichzeitig eine Drehbewegung des Stiels (14) gegenüber dem Hilfshandgriff (19) verhindert, und in einer anderen Betriebsstellung eine Verlagerung des Handgriffs längs des Stiels (14) verhindert, aber eine Drehbewegung zwischen dem Stiel (14) und dem Hilfshandgriff (19) ermöglicht.

2. Arbeitsgerätschaft nach Anspruch 1, dadurch **gekennzeichnet**, daß der untere Teil des Stiels (14) teleskopisch verlängerbar ist, damit die Länge des Stiels (14, 14' im Verhältnis zum Hilfshandgriff (19) einstellbar ist und damit sowohl für kleine als auch für große Menschen eine ergonomisch richtige Arbeitsposition erzielbar ist.

3. Arbeitsgerätschaft nach Anspruch 1, dadurch **gekennzeichnet**, daß die reibschlüssige Arretiereinrichtung Hülsen (27, 28) umfaßt, die zwischen den Krägen (24, 26) der Arme (23, 25) angeordnet und längs des Stiels (14) verlagerbar und auf diesem verdrehbar sind; daß die Hülsen (27, 28) derart miteinander verschraubt sind, daß eine Verdrehung zwischen den Hülsen (27, 28) in einer Richtung eine reibschlüssige Arretierung des Hilfshandgriffs (19) gegen eine Relativverdrehung auf dem Stiel (14) und gegen eine Bewegung längs des Stiels zur Folge hat, und in der entgegengesetzten Richtung eine Verdrehung des Stiels (14) gegenüber dem Hilfshandgriff (19) ermöglicht, wobei der Hilfshandgriff gegen eine Bewegung längs des Stiels arretiert ist.

4. Arbeitsgerätschaft nach Anspruch 1 oder 3, dadurch **gekennzeichnet**, daß die Hülsen (27, 28) gegeneinander verdrehbar sind, so daß der Hilfshandgriff und die Hülsen (27, 28) längs des Stiels bewegbar sind.

5. Arbeitsgerätschaft nach Anspruch 2, dadurch **gekennzeichnet**, daß das lasttragende Werkzeug (15) der Arbeitsgerätschaft mit dem Stiel (14) oder mit dem teleskopischen Teil desselben lösbar verbunden ist.

## Revendications

1. Instrument comprenant un manche (14), un moyen de préhension (10) supérieur monté sur le manche, un outil (15) ou une partie inférieure pouvant supporter une charge, et un moyen de préhension (19) auxiliaire qui est monté sur le manche (14) de façon à pouvoir se déplacer dans la direction longitudinale de celui-ci, ce moyen de préhension (19) auxiliaire comprenant deux bras (23) qui divergent dans une direction allant des premières extrémités, qui sont proches l'une de l'autre où en contact l'une avec l'autre, à des secondes extrémités qui sont à distance relativement grande l'une de l'autre et qui sont munies d'anneaux (24, 26), qui sont dirigées selon un même plan et qui sont destinées à entourer le manche (14), et cet instrument comprend en outre des moyens destinés à verrouiller le moyen de préhension (19) auxiliaire dans une position donnée le long du manche, caractérisé en ce que les bras (23, 25) sont reliés rigidement l'un à l'autre, de manière à définir une zone constante (a) entre les extrémités portant anneaux des bras (23, 25); et un dispositif (27, 28) de verrouillage à frottement se trouve dans cette zone (a) et est agencé de sorte que dans l'une de ses positions de fonctionnement il empêche le déplacement du moyen de préhension (19) auxiliaire le long du manche (14) tout en empêchant toute rotation du manche (14) par rapport au moyen de préhenstion (19) auxiliaire, et dans une autre position de fonctionnement il empêche tout déplacement du moyen de préhension le long du manche (14) tout en permettant un mouvement de rotation entre le manche (14) et le moyen de préhension (19) auxiliaire.

2. Instrument selon la revendication 1, caractérisé en ce que la partie inférieure du manche (14) est extensible de façon téléscopique de sorte qu'elle permet d'ajuster la longueur du manche (14, 14') en fonction du moyen de préhension (19) auxiliaire et permet ainsi d'obtenir une position de travail correct ergonométriquement que ce soit pour des gens de petite comme de grande taille.

3. Instrument selon la revendication 1, caractérisé en ce que le dispositif de verrouillage à frottement comprend des douilles (27, 28) montées entre les anneaux (24, 26) sur les bras (23, 25), mobiles le long du manche (14) et pouvant tourner autour de celui-ci; en ce que les douilles (27, 28) sont taraudées de manière que la rotation relative des douilles (27, 28) dans un sens crée un verrouillage par frottement du moyen de préhension (19) auxiliaire qui s'oppose à la rotation par rapport au manche (14) ainsi qu'à tout mouvement le long du manche, et en ce que dans le sens opposé le manche (14) peut tourner par rapport au moyen de préhension (19) auxiliaire, ce moyen de préhension auxilaire étant verrouillé sans possibilité de mouvement le long du manche.

4. Instrument selon la revendication 1 ou 3, caractérisé en ce que les douilles (27, 28) peuvent tourner l'un par rapport à l'autre de façon que le moyen de préhension auxilaire et les douilles (27, 28) peuvent être déplacés le long du manche.

5. Instrument selon la revendication 2, caractérisé en ce que le moyen pouvant supporter une charge (15) de l'instrument est fixé de façon amovible au manche (14) ou à la partie téléscopique de celui-ci.
